# EUROPEAN PATENT SPECIFICATION

(11) **EP 1 616 759 B1**
(45) Date of publication and mention of the grant of the patent: **28.02.2007**
(21) Application number: 05105654.7
(22) Date of filing: 24.06.2005
(51) Int. Cl.: B60R 21/01

(54) **An electronic device for de-activating the passenger air-bag in a motor-vehicle**
Eine elektronische Vorrichtung zum Deaktivieren eines Beifahrerairbags eines Kraftfahrzeugs
Un dispositif électronique de désactivation pour airbag passager dans un véhicule

(30) Priority: 13.07.2004 IT TO20040483
(43) Date of publication of application: 18.01.2006
(73) Proprietor: FIAT AUTO S.p.A., 10135 Torino (IT)
(72) Inventor: Luca', Rosario, 10135 Torino (IT); Ravagnan, Michele, 10135 Torino (IT)
(74) Representative: Quinterno, Giuseppe

(56) References cited:
- EP-A- 0 891 899
- US-A- 5 938 234
- US-A- 6 040 637
- US-A- 6 043 566
- US-B1- 6 378 899

## Description

The present invention relates to a device for de-activating the passenger side airbag in a motor vehicle, in particular a motor car.

Prior art de-activators include a two-position switch, arranged on the instrument panel of the motor vehicle and controllable by the ignition key, connected to the air-bag control unit.

Commutation of the switch from one position to the other de-activates/activates the air-bag control unit and upon de-activation an optical warning on the instrument panel is illuminated.

The driver therefore knows whether the passenger side air-bag is de-activated and is able to fit a child car seat to the passenger seat, thereby complying with safety regulations.

Prior art arrangements such as the one described are satisfactory from a functional point of view but do involve some disadvantages; fitting a key-operated switch on the instrument panel and electrically connecting it to the air-bag control unit represent costs which are not negligible, both in terms of absolute costs and in terms of mounting costs.

The object of the present invention is to provide an electronic de-activator for the passenger side air-bag of a motor vehicle, in particular of a motor car, which overcomes the aforesaid disadvantages, is economical, easy to manufacture and of absolutely reliable performance.

This object is achieved according to the invention by providing an electronic device for de-activating the passenger side air-bag of a motor vehicle, particularly a motor car, having the characteristics specifically claimed in the Claims which follow.

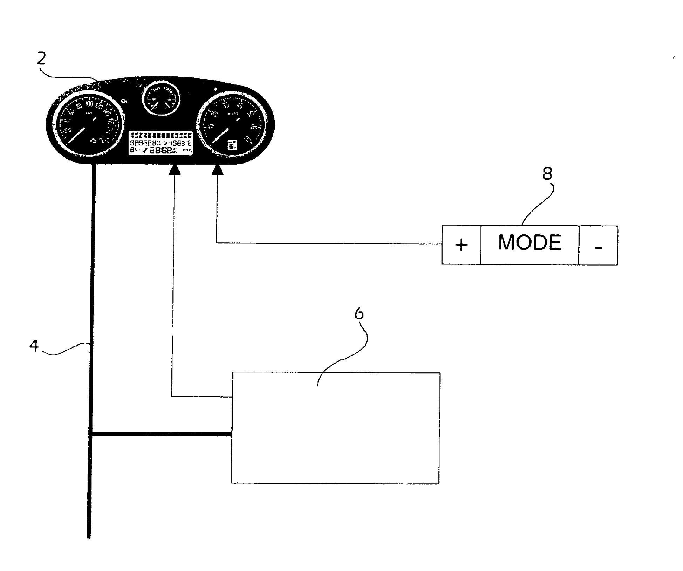

Further characteristics and advantages of the present invention will become apparent from the following detailed description, which is provided purely by way of non-limitative example, with reference to the appended drawing, which illustrates schematically the device of the present invention.

With reference to the drawing, the instrument panel of a motor vehicle, in particular of a motor car, is indicated 2.

A serial transmission line of 4 B-CAN type (a type known per se) connects the instrument panel 2 to the unit 6 controlling the air-bags, which is in turn connected to the instrument panel 2.

A keypad 8, including the keys (+) and (-) for example, is connected to the instrument panel 2.

The device forming the subject of the present invention operates as follows.

A menu displaying options and data appears on the instrument panel (once the key is in the ignition but while the vehicle is stationary), including the option of de-activating the passenger side air-bag.

If the driver chooses to de-activation he can be asked, as an additional safety precaution to enter a PIN code, a previously memorized sequence of four symbols or codes, for example.

The code is entered by pressing a series of (+) and/or (-) keys; purely by way of example, this could be four +, followed by three -, another three - and one +, or any other combination of any number of + or - signs.

If the PIN code is correct, the instrument panel 2 sends a signal to the control unit 6 which de-activates the passenger side air-bag and sends a signal back to the panel confirming de-activation and illuminating a warning light (not shown) on the instrument panel 2.

The advantages of the de-activator device of the present invention are clear from the above description. The device makes it possible to dispense with the key-operated switch arranged on the instrument panel and the associated wiring.

The time for mounting the above device is also reduced.

An additional indirect advantage lies in the fact that the condition of the passenger side air-bag is entered into the memory of the instrument panel and/or the air-bag control unit, which could prove useful for establishing liability in the event of an accident.

Naturally, the principle of the invention remaining unchanged, details as described and illustrated may be varied widely, without departing thereby from the scope of protection of the invention defined by the appended claims.

## Claims

1. An electronic de-activator device for the passenger side air-bag of a motor vehicle, in particular of a motor car, of a type including an instrument panel (2) connected by a serial transmission line (4) to the air-bag control unit (6) connected to the instrument panel (2), a keypad (8) being connected to the instrument panel (2), **characterized in that** selection of the air-bag de-activation option on a menu displayed on the instrument panel (2) and entering a safety code (PIN) into the keypad (8) causes the passenger side air-bag to be deactivated, with consequent illumination of a warning light on the instrument panel (2).

2. An electronic de-activator device according to Claim 1, **characterized in that** the safety code (PIN) comprises several symbols.

## Patentansprüche

1. Elektronische Deaktivierungs-Vorrichtung für den Airbag auf der Seite des Beifahrers eines Kraftfahrzeugs, im Besonderen eines Personenkraftwagens, wobei die Vorrichtung ein Armaturenbrett (2), das über eine serielle Übertragungsleitung (4) mit der Steuereinheit (6) für den Airbag verbunden ist, die mit dem Armaturenbrett (2) verbunden ist, sowie ein Tastenfeld (8) aufweist, das mit dem Armaturenbrett (2) verbunden ist, **dadurch gekennzeichnet, dass** die Auswahl der Option zum Deaktivieren des Airbags in einem Menü, das auf dem Armaturenbrett (2) angezeigt wird, sowie das Eingeben eines Sicherheitskodes (PIN) auf dem Tastenfeld (8) verursachen, dass der Airbag auf der Seite des Beifahrers deaktiviert wird, worauf eine Warnlampe auf dem Armaturenbrett (2) eingeschaltet wird.

2. Elektronische Deaktivierungs-Vorrichtung gemäß Anspruch 1, **dadurch gekennzeichnet, dass** der Sicherheitskode (PIN) mehrere Symbole enthält.

## Revendications

1. Dispositif électronique de désactivation pour airbag passager dans un véhicule à moteur, en particulier un véhicule automobile, d'un type comprenant un tableau de bord (2) connecté par une ligne de transmission en série (4) à l'unité de commande de l'airbag (6) elle-même connectée au tableau de bord (2), un clavier (8) étant connecté au tableau de bord (2), **caractérisé en ce que** la sélection de l'option de désactivation de l'airbag à partir d'un menu affiché sur le tableau de bord (2) et l'entrée d'un code de sécurité (PIN) au moyen du clavier (8) provoquent la désactivation de l'airbag passager, ayant pour conséquence l'allumage d'une lumière d'avertissement sur le tableau de bord (2).

2. Dispositif électronique de désactivation selon la revendication 1, **caractérisé en ce que** le code de sécurité (PIN) comprend plusieurs symboles.
